# DEMANDE DE BREVET EUROPEEN

(11) **EP 2 178 030 A1**
(43) Date de publication de la demande: **21.04.2010**
(21) Numéro de dépôt: 08305616.8
(22) Date de dépôt: 30.09.2008
(51) Int. Cl.: G06K 17/00, G06K 19/07, G06K 7/00, H04B 3/54

(54) **Procédé et système de communication de données avec un dispositif électronique inaccessible**

(71) Demandeur: GEMPLUS, 13420 Gémenos (FR)
(72) Inventeur: Caruana, Jean-Paul, 13009 Marseille (FR); Capomaggio, Grégory, 13360 Roquevaire (FR)

(57) **Abrégé**

L'invention concerne un procédé de communication de données avec un dispositif électronique, comprenant l'étape de réception de signaux véhiculés par un conducteur électrique de liaison (3); Le procédé se distingue en ce qu'il comprend les étapes suivantes:
- mise en place d'une interface radiofréquence RF à contacts électriques LA, LB dans le dispositif,
- extraction des signaux hors du conducteur électrique de liaison,
- et injection des signaux résultant des signaux extraits, sous forme de trames de signaux radiofréquences dans l'interface RF à contacts électriques.

L'invention concerne également un dispositif de communication radiofréquence, un système comportant le dispositif et une machine utilisant le dispositif.

## Description

L'invention concerne un procédé et un système de communication de données avec un dispositif électronique comprenant l'étape ou des moyens de réception de signaux véhiculés par un conducteur électrique de liaison.

Elle concerne également en particulier des dispositifs d'identification d'abonné tels que des module SIM ou module universel SIM (USIM) destinés à équiper des appareils dotés de moyens de communication radiofréquence notamment de type cellulaire.

Les modules M2M sont des dispositifs d'identification d'abonné, comme les cartes SIM, fixés dans diverses nouvelles cibles comme l'automobile, les distributeurs de boissons, ou autres machines, équipements, installations, etc., ces nouvelles cibles étant amenées à se développer.

Ces modules sont solidairement fixés dans ces appareils et sont robustes; D'autre part aucune connexion extérieure n'est prévue ou possible pour communiquer avec ces modules et il existe un grand nombre de contraintes d'intégration selon le type de machine visé. Par exemple dans une voiture, le module M2M pourrait être intégré sous le siège ou n'importe où sans aucun accès direct.

Une solution pour accéder à ces modules et modifier le contenu mémoire est de télécharger des données à l'aide de moyens communicants radiofréquences du réseau de téléphonie mobile ou cellulaire qu'elles équipent et auxquels les modules sont connectés par contact ohmique.

Toutefois, il est souhaitable de pouvoir personnaliser le module SIM pour pouvoir accéder au réseau d'un opérateur, changer d'opérateur, de numéro, dès le début avant mise en fonctionnement de la communication et personnaliser le module , le cas échéant.

A ce jour, il est donc très difficile d'accéder physiquement au module de manière à lui envoyer des données notamment de personnalisation.

Il y a donc aujourd'hui un besoin pour effectuer une gestion directe du module SIM, notamment pour de la personnalisation et mise à jour, le module pouvant être difficilement accessible voir même très difficile à localiser.

Concernant les procédés de communication avec un module d'identification d'abonné, on connait le brevet FR 2 888 974 qui décrit comment communiquer entre un téléphone mobile et une puce de module SIM par légère modulation de la tension d'alimentation, la démodulation étant effectuée dans la puce. Cette solution a l'inconvénient de requérir des adaptations importantes dans la conception des puces de circuits intégrés.

L'invention vise à satisfaire le besoin ci-dessus de permettre une personnalisation d'un module M2M SIM quel que soit son niveau ou mode d'intégration et sans accès le cas échéant.

L'invention consiste dans son principe à prévoir dans le dispositif une interface RF capable de recevoir des trames de signaux de type radiofréquence, puis à recevoir les données via un conducteur, à extraire les données hors du conducteur pour les injecter dans l'interface RF.

Considérant que l'interface d'un dispositif est difficilement accessible même en radiofréquence compte tenu d'un environnement métallique, l'idée de base est de véhiculer les données jusqu'à proximité du dispositif en s'aidant notamment de la structure de la machine ou câblage de circuit existant et à prélever et, le cas échéant, transformer les données en signaux exploitables par le circuit RF.

De manière avantageuse, le signal est prélevé et/ou transformé sous forme de trames de type radiofréquence analogique de manière à être injectée directement de manière électrique sur une interface à contact électrique du dispositif radiofréquence. Avantageusement, le dispositif comprend un module d'identification d'abonné de type combi, l'alimentation s'effectuant par contact électrique de manière classique, tandis que l'autre interface, permet de recevoir des signaux RF par contact électrique.

Le signal RF étant du 13.56MHz conforme à l'ISO/IEC 14443 et toutes les autres couches (logiciel, protocole, couche de liaison) sont basées sur le standard ISO/IEC 14443.) grâce à l'invention on peut utiliser une puce SIM combi comme puce SIM.

Ainsi, grâce à l'invention, il n'y a pas de contrainte d'intégration pour le fabricant de machine. Il n'est pas nécessaire de connaître la localisation du module M2M qui peut être localisée n'importe où.

Il n'y a pas non plus de contrainte d'intégration pour le fabricant de module de manière à personnaliser in situ le module M2M.

Il n'y a pas non plus de contrainte d'intégration pour le fabricant de module de fabriquer une SIM spécifique dans la mesure où une SIM combi existe déjà;

L'invention permet également de connecter et d'adresser plusieurs modules grâce aux propriétés d'anticollision.

A cet effet, l'invention a pour objet un procédé de communication de données avec un dispositif électronique, comprenant l'étape de réception de signaux véhiculés par un conducteur électrique de liaison; Le procédé se distingue en ce qu'il comprend les étapes suivantes:
- mise en place d'une interface radiofréquence RF à contacts électriques dans le dispositif,
- extraction des signaux hors du conducteur électrique de liaison,
- et injection des signaux résultant des signaux extraits, sous forme de trames de signaux radiofréquences dans l'interface RF à contacts électriques.

Selon d'autres caractéristiques de mise en oeuvre :
- les données sont transmises en modulant des signaux radiofréquences sur un signal de puissance véhiculé par le conducteur électrique;
- la transmission s'effectue avec un lecteur radiofréquence ayant une interface capacitive avec le conducteur pour injecter le signal radiofréquence sur le conducteur;
- le dispositif comprend un module d'identification d'abonné (M2M);

L'invention concerne également un dispositif électronique comprenant des moyens de réception de signaux véhiculés par un conducteur électrique de liaison;

Le dispositif se distingue en ce qu'il comprend :
- une interface radiofréquence RF à contacts électriques,
- des moyens d'extraction des signaux hors du conducteur électrique de liaison,
- et des moyens d'injection pour injecter des signaux résultant des signaux extraits sous forme de trames radiofréquences dans l'interface RF à contacts électriques.

Selon d'autres modes de réalisation, du dispositif:
- le conducteur fait partie d'un circuit d'alimentation en puissance;
- Le dispositif comprend un module d'identification (M2M) de type combi, le circuit d'alimentation étant une alimentation en courant continu du circuit combi.

L'invention concerne également un système comprenant le dispositif ci-dessus; Le système se distingue en ce qu'il comprend en outre un conducteur électrique de liaison pour la transmission des données à destination du dispositif et des moyens de génération de données sur le conducteur électrique.

Selon une autre caractéristique, la transmission s'effectue avec un lecteur de type sans contact RF ayant une interface capacitive avec le conducteur électrique de liaison pour injecter des signaux sur le conducteur.

L'invention concerne également une machine comportant le dispositif selon ci-dessus et/ou étant équipée du système ci-dessus et/ou étant apte à mettre en oeuvre le procédé ci-dessus.

D'autres particularités et avantages de l'invention apparaîtront à la lecture de la description faite à titre d'exemple non limitatif et en regard des dessins annexés sur lesquels :
- La figure 1 illustre un système de communication radiofréquence selon un mode préféré de réalisation de l'invention;
- La figure 2 illustre les étapes du procédé de l'invention selon un mode préféré.

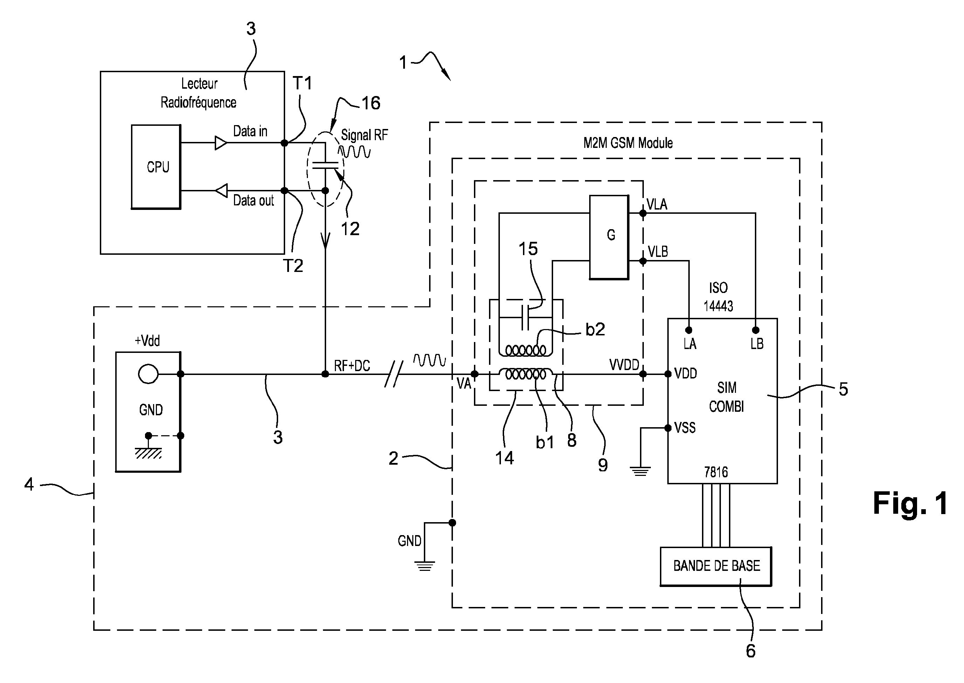

A la figure 1, un système de communication radiofréquence 1 comporte un dispositif 2 radiofréquence RF, un conducteur électrique de liaison 3 pour la transmission des données jusqu'au dispositif, des moyens de génération 3 d'un signal radiofréquence modulé sur le conducteur électrique.

Le dispositif 2 peut être compris dans tout élément 4 tel qu'un appareil / dispositif électronique de communication, assistant personnel, PDA, ordinateur portable, machine, distributeur, structure, véhicule automobile, tout équipement etc. destiné à communiquer à l'aide d'un circuit radiofréquence 5.

L'équipement 2 comporte classiquement une unité électronique de traitement à processeur 6 (dit base bande) destinée à gérer la fonction de téléphonie et des périphériques éventuels notamment une carte SIM 5, l'application GSM relative notamment à l'identification à un réseau téléphonique et/ou d'autres applications éventuelles, comme par exemple une application de rechargement à distance ou autre.

Selon l'invention le dispositif comprend un circuit sans contact RF ayant une interface radiofréquence RF à contacts électriques. Dans l'exemple, ce circuit est constitué par une carte SIM de type combi carte c'est-dire comportant une double interface à contacts selon ISO 7816 et une interface radiofréquence LB, LB conforme au standard ISO 14443.

Des connexions CLK, RST, GND, I/O de l'unité électronique 5 de base sont réalisées classiquement sur les contacts électriques correspondant de la mini-carte UICC, SIM ou (U)SIM conformément à une des normes ISO 7816 par exemple via un bloc de connecteurs à 8 contacts placé dans l'appareil (ou soudé) et correspondant aux plages de contact électrique de la carte SIM.

Le dispositif ou circuit ou module SIM peut également être fixé à demeure dans tout appareil, notamment par soudure sur une carte de circuit imprimé d'un appareil quelconque.

Selon un mode de réalisation préféré de l'invention, le dispositif 2 comprend des moyens d'extraction de données pour les injecter électriquement sur l'interface RF. Les moyens d'extraction sont constitués dans l'exemple par un circuit d'adaptation 7 et un convertisseur 9 apte à extraire les données sur un élément 8 de circuit d'alimentation en puissance

En l'occurrence, le convertisseur comprend un couplage d'une première bobine sur une seconde bobine placée entre le plot d'alimentation VDD de la SIM Combi et l'arrivée d'une alimentation du dispositif. Une capacité est montée aux bornes de la bobine qui est branchée au circuit d'adaptation de tension 7 avant d'alimenter les plots LA et LB de l'interface ISO 14443 de la SIM Combi.

Les moyens d'extraction 9, 14 sont ici avantageusement situés hors du circuit RF contenu dans la SIM. Ils peuvent faire l'objet d'un composant d'extraction 9, 14 externe qui serait ajouté ou fixé au module SIM standard.

Le circuit RF de la SIM comporte de manière connue des moyens de réception et traitement de trames de signaux radiofréquences arrivant sur les bornes LA, LB.

Le dispositif est alimenté par une source d'énergie, notamment une batterie 10 par un conducteur 3 reliant la borne VDD du dispositif au travers de la bobine b1. Le plot de masse Vss est relié à la masse GND du châssis de l'appareil, (voiture, distributeur)

Selon un mode préféré, l'invention utilise un conducteur électrique de liaison pour la transmission des données jusqu'au dispositif.

Dans l'exemple, comme une alimentation normale en courant continu est prévue pour la SIM dans une machine comportant un module M2M, on utilise le conducteur d'alimentation 3 pour véhiculer des signaux RF selon la technologie du courant porteur.

Le circuit radiofréquence, dans l'exemple, est compris dans un module d'identification M2M de type combi et le circuit d'alimentation est une alimentation en courant continu du circuit combi.

Dans un autre exemple où la machine serait une voiture, la SIM pourrait être alimentée par des moyens conducteurs reliés à une batterie avec adaptateur de tension.

Selon le mode de réalisation préféré de l'invention, le système comprend également des moyens de génération 3 d'un signal radiofréquence modulé sur le conducteur électrique pour la transmission de données. L'injection s'effectue par contact électrique avec le conducteur électrique de liaison.

Dans l'exemple, ces moyens comprennent ou constituent un lecteur ou terminal classique radiofréquence 3 comportant une interface radiofréquence à contact électrique ayant des bornes T1, T2 destinées normalement à recevoir une antenne radiofréquence.

Pour la mise en oeuvre du procédé, le terminal comporte des moyens de modulation / démodulation aptes à moduler/démoduler le signal radiofréquence "data in" et/ou démoduler le signal parvenant sur le fil conducteur "data out". Ces moyens dans l'exemple comprennent une interface capacitive avec le conducteur électrique de liaison pour injecter le signal RF sur le conducteur. A cet effet, une capacité 12 remplace l'antenne et une borne de la capacité est connectée au conducteur électrique 3 de liaison.

Avantageusement, le conducteur correspond au câble d'alimentation du dispositif; ce conducteur peut ou non véhiculer ou porter le signal de puissance d'alimentation du dispositif. L'important selon le mode préféré, étant que le conducteur passe à proximité du dispositif pour permettre une extraction ou une interception.

Le système ci-dessus est normalement destiné à équiper une machine comportant le dispositif ci-dessus et/ou étant apte à mettre en oeuvre le procédé qui va être décrit ci-après.

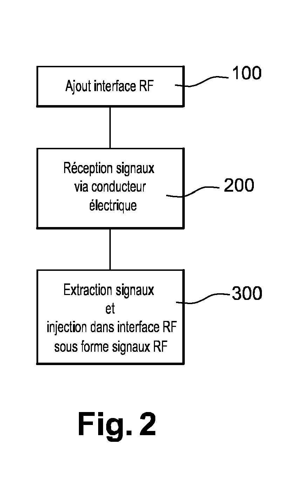

Le fonctionnement du système de la figure 1 va être expliqué en relation avec des étapes du procédé à l'aide de la figure 2.

Le système adapté ci-dessus, est utilisé pour effectuer une transaction RF avec un dispositif sous forme de module SIM comportant selon l'invention une interface radiofréquence qui a été ajoutée (100) car normalement, le module SIM n'a pas besoin d'en comporter une quand il peut se satisfaire d'une interface ISO 7816; L'interface fonctionne ici sur une fréquence 13,56 Mhz et le module équipe une voiture. Plus exactement, le module est de type Combi avec une double interface de communication à contact selon l'ISO 7816 et à antenne selon l'ISO 14443.

Au cours d'une opération de transaction ayant pour finalité une initialisation ou personnalisation ou mise à jour de données contenues dans la SIM, un utilisateur branche un terminal 3 sur l'allume cigare sans avoir besoin d'extraire la SIM ou accéder à une interface, la SIM se trouvant sous le siège ou dans un endroit inaccessible de la voiture.

L'allume cigare est en relation avec le circuit d'alimention du module SIM M2M. Le cas échéant, un régulateur transforme la tension pour l'adapter à la SIM.

Le terminal de type sans contact RF adapté, ouvre une session de communication avec le module M2M et transmet des données, notamment d'authentification en vue d'une mise à jour.

Les données sont générées classiquement sous forme de signal RF par le terminal et transmises jusqu'à son interface T1, T2.

Le signal RF est transmis à l'interface capacitive que le terminal possède avec le conducteur pour injecter et démoduler le signal RF sur le conducteur.

Le signal RF parvient donc aux bornes de la capacité 12 reliée elle-même au conducteur électrique de liaison, constitué ici par le conducteur d'alimentation du module SIM. Les données sont donc transmises en modulant des signaux radiofréquences sur un signal de puissance véhiculé par un conducteur électrique. De ce fait on utilise à bon escient un circuit existant de la voiture qui comprend via l'allume cigare comme un point d'entrée des signaux qui pourront se propager jusqu'au module via le circuit d'alimentation.

De manière avantageuse, les trames des signaux RF transmis et/ou reçus sont compatibles au standard ISO/IEC 14443 et ont une fréquence de 13.56MHz. Ainsi, les modifications du terminal sont mineures voire nulle pour communiquer et/ou recevoir des signaux et données.

Le signal RF se superpose ensuite au courant continu porteur du conducteur qui alimente le point VDD de la carte SIM.

Selon le mode préféré de l'invention, on procède (200) à la réception des signaux véhiculés par le conducteur. Dans l'exemple, c'est l'ensemble signaux RF superposé au signal continu qui parvient au convertisseur 9.

Ensuite selon une étape (300), on procède à l'extraction des signaux du conducteur; Pour cela, les signaux arrivent dans le convertisseur 9, passent par la bobine 1 avant d'atteindre la carte SIM;

Des signaux RF induits dans la bobine b1 sont récupérés par la seconde bobine b2 et capacité 15.

Ensuite, selon l'étape (300) préférée du procédé, les signaux résultant des signaux extraits sont injectés dans l'interface RF sous forme de signaux RF.

Dans l'exemple, les signaux sont injectés électriquement à l'interface RF du module SIM après avoir été adaptés en tension par l'étage d'adaptation G en une tension acceptée par le module SIM.

Les trames radiofréquences parvenant sur les bornes d'interface RF LA, LB du module SIM combi ont les mêmes caractéristiques que si elles étaient issues d'une antenne reliée aux points LA, LB.

Grâce à l'invention, les données sont extraites hors du circuit RF ou du module SIM pour les injecter électriquement sur l'interface RF du module SIM. De ce fait, il y a peu ou pas de modifications à effectuer sur le module SIM. En outre, une adaptation peut s'effectuer avec des moyens d'adaptation placés à l'extérieur d'une puce SIM combi standard qui viendrait s'ajouter à elle, sous forme, notamment d'un composant d'adaptation 14 comportant les éléments 9, G et ayant les trois connecteurs VVDD, VLA, VLB connectés respectivement au VDD, LA, LB et un connecteur VA à connecter à la tension d'alimentation.

Pour communiquer des données aux modules SIM, on peut employer toute technique de modulation connue comme par exemple la modulation d'amplitude, la modulation de fréquence ou la modulation de phase qui serait injectée sur un conducteur ou support de communication disponible dans la machine et passant à proximité du module SIM.

A proximité du module, un moyen d'adaptation récupère le signal, le transforme le cas échéant en signal acceptable par le module et l'injecte dans le module.

Différentes manières connues de l'homme du métier pour coder les données, informations, avec le protocole associé peuvent être utilisées.

Dans une variante, le signal est récupéré sur le conducteur, puis transformé en signal radiofréquence à l'aide d'une bobine couplé à une interface à antenne du module.

Le principe de l'invention peut être appliqué et adapté pour l'utilisation de tout réseau électrique, notamment le réseau EDF à 220 V, pour communiquer de manière filaire avec un dispositif radiofréquence notamment un module SIM.
- Grâce à l'invention, on peut utiliser à bon escient, les propriétés analogiques de l'interface sans contact RF pour extraire le signal;
- On peut utiliser les propriétés de fréquence de l'interface sans contact pour séparer les données liées au courant continu;
- On peut utiliser les propriétés d'anticollision de l'interface sans contact pour connecter plusieurs modules notamment M2M sur le même circuit de conducteurs ou réseau d'alimentation;
- On peut utiliser le protocole sans contact pour transférer les commandes SIM sans modification du jeu de commande utilisé pour personnaliser.

## Revendications

**1.** Procédé de communication de données avec un dispositif électronique, comprenant l'étape de réception de signaux véhiculés par un conducteur électrique de liaison (3),
**caractérisé en ce qu'**il comprend les étapes suivantes:
- mise en place d'une interface radiofréquence RF à contacts électriques LA, LB dans le dispositif,
- extraction des signaux hors du conducteur électrique de liaison,
- et injection des signaux résultant des signaux extraits, sous forme de trames de signaux radiofréquences dans l'interface RF à contacts électriques.

**2.** Procédé selon la revendication précédente, **caractérisé en ce que** les données sont transmises en modulant des signaux radiofréquences sur un signal de puissance véhiculé par le conducteur électrique.

**3.** Procédé selon l'une des revendications précédentes, **caractérisé en ce que** la transmission s'effectue avec un lecteur radiofréquence (3) ayant une interface capacitive (12) avec le conducteur (3) pour injecter le signal radiofréquence sur le conducteur.

**4.** Procédé selon l'une des revendications précédentes, **caractérisé en ce que** le dispositif (2) comprend un module d'identification d'abonné (M2M).

**5.** Procédé selon l'une des revendications précédentes, **caractérisé en ce que** les signaux RF sont compatibles au standard ISO/ IEC 14443 et ont une fréquence de 13.56MHz.

**6.** Procédé selon l'une des revendications précédentes, **caractérisé en ce que** le conducteur de liaison est un câble d'alimentation véhiculant une tension continue (Vdd) utilisée par le dispositif.

**7.** Dispositif électronique comprenant des moyens de réception de signaux véhiculés par un conducteur électrique de liaison (3),
**caractérisé en ce qu'**il comprend :
- une interface radiofréquence RF à contacts électriques (LA, LB),
- des moyens convertisseurs (9,14) pour extraire des signaux hors du conducteur électrique de liaison et pour injecter des signaux résultant des signaux extraits sous forme de trames radiofréquences dans l'interface RF à contacts électriques.

**8.** Dispositif selon la revendication précédente, **caractérisé en ce que** le conducteur fait partie d'un circuit d'alimentation en puissance.

**9.** Dispositif selon l'une des revendications 7 à 8, **caractérisé en ce qu'**il comprend un module d'identification (M2M) de type combi à double interface à contacts et à antenne, le circuit d'alimentation étant une alimentation en courant continu du circuit combi.

**10.** Système de communication radiofréquence comportant le dispositif radiofréquence RF (2) selon l'une des revendications 8 à 9, **caractérisé en ce qu'**il comprend en outre:
- un conducteur électrique de liaison (3) pour la transmission des données à destination du dispositif,
- des moyens (3) de génération de signaux comportant les données et d'injection (12, 16) sur le conducteur électrique.

**11.** Système selon la revendication précédente, **caractérisé en ce que** la transmission s'effectue avec un lecteur de type sans contact RF ayant une interface capacitive (12) avec le conducteur électrique de liaison pour injecter des signaux sur le conducteur.

**13.** Machine comportant le dispositif selon l'une des revendications 1 à 6 et/ou étant équipée du système selon l'une des revendications 7 à 8 et/ou étant apte à mettre en oeuvre le procédé selon l'une des revendications 1 à 6.
